Europäisches Patentamt

European Patent Office

Office européen des brevets

(19)

(11) Numéro de publication : **0 533 512 A1**

# (12) DEMANDE DE BREVET EUROPEEN

(21) Numéro de dépôt : **92402215.5**

(22) Date de dépôt : **03.08.92**

(51) Int. Cl.⁵ : **A23J 3/18,** A23L 1/105, A23J 1/12

---

(30) Priorité : **16.09.91 FR 9111368**

(43) Date de publication de la demande :
**24.03.93 Bulletin 93/12**

(84) Etats contractants désignés :
**AT BE CH DE DK ES FR GB GR IE IT LI LU MC NL PT SE**

(71) Demandeur : **AGRO INDUSTRIE RECHERCHES ET DEVELOPPEMENTS (A.R.D.)**
**27/29 rue Châteaubriand**
**F-75008 Paris (FR)**

(72) Inventeur : **Pernes-Costa, Sylvie, Résidence Saint-Germain**
**2 Square du 8 Mai, Appt G 221**
**F-60200 Compiegne (FR)**
Inventeur : **Thoumy, Véronique**
**7, rue des Hauts-Moulins**
**F-44800 Saint Herblain (FR)**
Inventeur : **Pauwels, Olivier**
**52 bis, rue des Capucins**
**F-51100 Reims (FR)**
Inventeur : **de Baynast, Régis**
**35, rue de l'Ermitage**
**F-78000 Versailles (FR)**

(74) Mandataire : **Bourgognon, Jean-Marie et al**
**Cabinet Flechner 22, Avenue de Friedland**
**F-75008 Paris (FR)**

---

(54) **Produit lipidoprotéique dérivé de la farine de blé, son procédé de préparation et ses applications.**

(57)  Il comprend, sur la matière sèche, de 70 à 75 % en poids de matières azotées totales, de 10 à 15 % en poids de lipides, de 4 à 7 % en poids de fibres, de 2 à 5 % en poids de sucres et de 3 à 5 % en poids de cendres, ayant une teneur en glutamine, exprimée en acide glutamique, représentant de 30 à 35 % du poids de tous les acides aminés, et ayant une solubilité ISA d'au moins 60 % et d'au plus 95 % et qui est constante, quel que soit le pH. Industrie agroalimentaire.

EP 0 533 512 A1

Jouve, 18, rue Saint-Denis, 75001 PARIS

La présente invention se rapporte aux produits dérivés de la farine de blé, à leurs procédés de préparation et à leurs applications.

Un grand nombre de variétés de blé, à haut rendement, ne sont pas panifiables. On les utilise simplement comme aliment du bétail.

Au brevet canadien 1.146.800, on propose de valoriser la farine, notamment de blé non panifiable, par un procédé qui consiste à mélanger de l'eau et de la farine pour former un pâton, à le soumettre à l'action d'une α-amylase, qui en liquéfie l'amidon de manière à faciliter la séparation ultérieure de ce que ce brevet canadien dénomme "gluten" d'un sirop de sucre.

L'invention vise un produit lipidoprotéique dérivé de la farine de blé, qui peut être utilisé comme ingrédient alimentaire permettant notamment d'alléger les produits et comme substitut de la poudre de lait écrémé pour l'alimentation animale, notamment pour les animaux non sevrés à engraisser, alors que les produits d'origine céréalière étaient jusqu'ici absolument impropres à un tel usage.

L'invention a donc pour objet un produit lipidoprotéique comprenant, sur la matière sèche, de 70 à 75 % en poids de matières azotées totales, de 8 à 15 % en poids de lipides, de 3 à 7 % en poids de fibres, de 2 à 5 % en poids de sucres et de 3 à 7 % en poids de cendres, ayant une teneur en glutamine, exprimée en acide glutamique, représentant de 25 à 35 % du poids de tous les acides aminés et ayant une solubilité ISA d'au moins 50 % et d'au plus 95 %, cette solubilité ISA étant constante, quel que sait le pH.

Par matières azotées totales, on entend les matières azotées telles qu'elles sont déterminées par le test de Kjehdahl, avec N = 5,7.

On détermine les lipides, suivant l'invention, en dosant les matières grasses extraites en utilisant un extracteur Soxhlet en présence d'hexane (5 g de produit pour 250 ml d'hexane) en maintenant une ébullition sous reflux pendant 6 heures. Après évaporation de l'hexane, on définit le taux de lipides par le rapport entre le poids de l'extrait sec et le poids de matière sèche totale.

Les fibres sont déterminées par la méthode Fiberzim Kit de chez Novo Nordisk suivante :

On effectue tout d'abord un broyage du produit, tel que les particules obtenues soient de taille inférieure à 5 mm. On procède également au séchage des particules.

Dans chaque creuset filtrant, mettre une couche homogène de Célite 545 d'environ 8 mm. Placer les creusets une nuit à 105°C. laisser refroidir au dessicateur, puis peser.

Peser exactement environ 1 g (du produit exempt de matières grasses), dans un erlenmeyer de 250 ml. Ajouter 50 ml de tampon phosphate. Agiter. Couvrir l'erlenmeyer avec une feuille d'aluminium (conserver cette feuille tout au long de l'expérience). Laisser l'erlenmeyer au bain-marie agité à 100°C pendant 15 minutes.

Ajouter 50 $\mu$l d'α-amylase. Placer l'erlenmeyer au bain-marie agité à 100°C pendant 15 minutes. puis rethermostater l'erlenmeyer à 60°C pendant 15 minutes.

Ajuster le pH à 7,5 avec NaOH 0,275 N.

Rethermostater l'erlenmeyer à 60°C pendant 15 minutes et ajouter 50 $\mu$l de protéase.

Placer au bain-marie agité à 60°C pendant 40 minutes.

Ajuster le pH à 4,5 avec HCl 0,322 N. Puis rethermostater l'erlenmeyer à 60°C pendant 15 minutes.

Ajouter 150 $\mu$l d'amyloglucosidase. Placer au bain-marie agité à 60°C pendant 40 minutes.

Préchauffer de l'alcool à 95 % à 60°C, et ajouter cet alcool jusqu'à un volume de 200 ml dans l'erlenmeyer. Puis laisser précipiter les fibres à température ambiante pendant 40 minutes.

Placer le creuset filtrant sur une trompe à vide et rincer la Célite 545 avec de l'alcool à 78 % de façon que la Célite forme un lit collant à la surface du creuset. Filtrer sous vide.

Laver le résidu trois fois avec 20 ml d'éthanol à 78 %, deux fois avec 10 ml d'éthanol à 95 % et deux fois avec 10 ml d'acétone.

Sécher le creuset contenant l'échantillon, pendant une nuit à 105°C.

Refroidir au dessicateur et peser.

On obtient ainsi le poids de fibres totales, plus les cendres, plus la matière azotée totale : poids total.

On procède donc au dosage des cendres et de la matière azotée totale.

$$\% \, F = \frac{Mt - \dfrac{\% \, N + \% \, C}{100} * Mt - B}{m} * 100$$

% F : Pourcentage de fibres totales

% N : Pourcentage de matières azotées

% C : Pourcentage de cendres

Mt : Poids total

m : Masse de l'échantillon

B : Pourcentage de fibres d'un blanc.

La teneur pondérale des sucres est déterminée en effectuant l'essai suivant. 5 g du produit à doser sont solubilisés à chaud dans 250 ml d'eau. Le mélange est filtré sur un filtre millipore 0,45 μm puis refiltré sur 0,2 μm. Un échantillon de 40 μl est injecté sur une colonne calcium HP87C (Biorad) sur un système HPLC Waters 410 (réfractomètre). Le débit du solvant (H$_2$O.) est de 0,5 ml/minute à 85°C. L'étalonnage préalable permet l'analyse qualitative et quantitative des sucres.

La teneur en glutamine et celle des autres acides aminés est déterminée de la manière suivante.

500 mg de l'échantillon à analyser sont soumis à une hydrolyse acide totale (HCl 6N-110°C pendant 24 à 48 heures). Afin de ne pas détruire la méthionine et la cystéime, le produit sera préalablement à l'hydrolyse soumis à une oxydation performique qui transforme la cystéine en acide cystique et la méthionine en méthionine sulfone.

L'hydrolysat est filtré sur un filtre millipore 0,2 μm. Un aliquote du filtrat (100 à 200 μl) est dilué dans un tampon, puis analysé par l'analyseur automatique Beckmann.

La solubilité ISA (NSI, soit Nitrogen Soluble index) est déterminée suivant la norme A.O.C.S., Official Method Ba 11-65.

5 g d'échantillon dans 200 ml d'H$_2$O (30°C) sont dispersés sous agitation. On centrifuge pendant 10 minutes sous 1500 tours à la minute. On décante et on conserve le surnageant que l'on filtre à travers la lame de verre et on dose la matière azotée totale du surnageant.

$$\% \, ISA \; = \; \frac{\% \text{ azote soluble dans l'eau}}{\% \text{ azote total}}$$

Il s'agit là d'une indication de solubilité et de digestibilité en milieu aqueux.

Le procédé de préparation produit lipidoprotéique , suivant l'invention, consiste à mettre un intermédiaire lipidoprotéique ayant une teneur en glutamine, exprimée en acide glutamique représentant de 25 à 35 % du poids de tous les acides aminés, ce qui signifie que cet intermédiaire lipidoprotéique provient de la farine de blé, et répondant à l'analyse suivante : de 70 à 75 % en poids de matières azotées totales, de 8 à 15 % en poids de lipides, de 3 à 7 % en poids de fibres, de 2 à 5 % en poids de sucres et de 3 à 7 % en poids de cendres, en contact avec une protéase.

Ce procédé peut s'effectuer mans apport d'eau, qu'il n'est plus nécessaire d'évaporer lors de l'atomisation.

Le procédé complet d'obtention du produit lipidoprotéique suivant l'invention, à partir de la farine de blé, peut comprendre les stades suivants :

Le premier stade consiste à mélanger de 0,8 à 10 parties en poids d'eau à 1 partie en poids de farine, jusqu'à obtention d'un pâton.

En général, la farine a une granulométrie de 180 μm, bien qu'on puisse utiliser des farines plus fines, allant par exemple jusqu'à 150 μm ou même 100 μm, et également des farines plus grossières, allant par exemple jusqu'à 300 μm, la granulométrie n'étant pas déterminante dès l'instant qu'un pâton se forme par mélange à l'eau. On obtient en général un pâton en moins de 10 minutes, sous agitation vigoureuse, comme il est habituel pour former un pâton dans la fabrication du pain. La farine utilisée peut être une farine panifiable mais, d'une manière très avantageuse suivant l'invention, ce peut être également une farine non panifiable. On peut effectuer le mélange à la température ambiante mais, d'une manière avantageuse, on préfère mélanger la farine à de l'eau portée à une température de 40 à 90°C et notamment de 50 à 60°C, pour rendre plue économique un stade ultérieur de chauffage. On effectue avantageusement le mélange dans un pulpeur de papeterie muni de moyens d'agitation puissants.

Dès obtention du pâton, on ajoute au contenu du pulpeur une α-amylase, tout en portant le pâton additionné de l'α-amylase à une température d'au moins 60°C et d'au plus 110°C, pendant au moins 30 minutes, l'addition de l'α-amylase étant pratiquaient instantanée. Comme α-amylase, on peut utiliser notamment :

La Termamyl 120L (120 KNU/g) de Novo Nordisk ou Ban 120L KNU/g de Novo Nordisk ou Canolpha 180L 180 000 U/ml de Biocon ou Fungomyl/800L (800 Fau/g) de Novo Nordisk.

KNU = Kilo Unité α-amylase Novo

Quantité d'enzyme qui dégrade 5,25 g d'amidon par heure, selon la méthode standard Novo.

On utilise une quantité d'α-amylase de 300 grammes à 500 grammes par tonne de farine, ces quantités étant exprimées pour une activité d'α-amylase de 100 KU/g. On règle le pH et la température en fonction des conditions optimales d'activité des enzymes. C'est ainsi, par exemple, que pour la termanyl/120L (Nova Nordisk) on utilise 400 g d'enzyme par tonne de farine dont l'activité est de 120 KNU/g.

Le traitement thermique de l'ensemble des protéines dans le pâton favorise la formation d'assemblages de haut poids moléculaire entre les protéines solubles et les protéines insolubles du blé, ce qui conduit à l'insolubilisation globale des protéines. Le traitement thermique permet aussi, par la désorganisation des structures secondaires et tertiaires des protéines, une exposition de nouveaux sites hydrophobes alors repliés vers l'intérieur, ce qui conduit à l'augmentation de l'hydrophobicité de surface des protéines. Comme les températures utilisées pour insolubiliser les protéines sont celles qui correspondent à la gélatinisation de l'amidon, la liquéfaction de l'amidon peut, de ce fait, avoir lieu simultanément. L'α-amylase liquéfie l'amidon, ce qui en détache les lipides. Or comme, en raison de la température, les protéines sont rendues hydrophobes, elles fixent les lipides libérés de l'amidon, de sorte que l'on obtient un produit lipidoprotéique. On peut ainsi insolubiliser avec les protéines environ 50 % en poids de tous les lipides d'une farine de blé. En outre, cette fixation des lipides et la condensation des protéines provoquée par la dénaturation thermique augmentent leur masse spécifique, ce qui permettra ultérieurement de mieux les séparer.

En général, on effectue ce stade de liquéfaction de l'amidon par une α-amylase pendant 30 minutes à 2 heures.

Un stade suivant, que l'on peut effectuer ou non, consiste à mettre la pâte en contact avec une gluco-amylase (exo α-amylase) et une pullulonase (enzyme débranchante E.C.3.2.1.41 pullulan-1,6-glucosehydrolase). On pourra utiliser, par exemple, AMG 300L (Novo Nordisk), ou Spezyme GA 300N (Gerencor) ou Dextrozyme 225/75L.

Cette opération facultative a pour but de régler l'équivalent en dextrose du jus sucré qui sera obtenu ultérieurement et qui pourra être valorisé et notamment d'en optimiser les qualités organoleptiques. On peut également mettre la pâte en contact avec une pentosanase telle que Depot 112 (Biocatalyst) ou Visiozyme 120L (Novo Nordisk) en une quantité de 10 à 200 g par tonne de farine, en vue de détruire les pentosanes pour faciliter les stades de purification du jus sucré.

Le stade suivant consiste à diluer la pâte par 0,3 à 1,5 parties en poids d'eau pour 1 partie en poids de pâte, pour obtenir une suspension, afin de faciliter le stade ultérieur de séparation en fonction de la densité des constituants de la suspension en un jus sucré léger et en l'intermédiaire lipidoprotéique cherché. Cette séparation peut se faire par décantation, par centrifugation ou par simple filtration, avec possibilité de répéter ces opérations jusqu'à obtention du degré de séparation souhaité.

Le stade suivant du procédé suivant l'invention consiste à soumettre cet intermédiaire lipidoprotéique à une protéolyse enzymatique. On utilise une endo-protéase ou un mélange de protéases à activité endo et exo. La quantité utilisée est de 2 grammes à 40 grammes par kilogramme de matière azotée totale mesurée selon la méthode Kjeldahl définie ci-dessus. Ces quantités sont exprimées par une activité de 400 000 (μg tyrosine/g d'enzyme/minute). On pourra utiliser, par exemple, MKC-Protéase L660 (Solvay), Neutrase 0,5L (Novo Nordisk), Alcoolase 2,4L (Novo Nordisk), Protéase acide (Biocon) ou la pepsine, la trypsine, la chymotrypsine.

Grâce à la dénaturation thermique des protéines on peut, par le procédé relativement simple mentionné ci-dessus, extraire une plus grande quantité des protéines présentes dans la farine qu'il n'était possible jusqu'ici, notamment quand on se contentait d'extraire le gluten et l'on extrait également une proportion importante des lipides. Et, cependant, le produit lipidoprotéique suivant l'invention, bien qu'obtenu en un plus grand rendement, n'a pas de propriétés allergènes vis-à-vis du veau.

Le produit lipidoprotéique suivant l'invention peut ainsi être utilisé comme produit alimentaire. Il peut être utilisé notamment comme additif protéinique en alimentation humaine, mais aussi pour l'alimentation de l'animal, par exemple pour alimenter des mammifères tels que le porc, le cheval, le boeuf, le chien, le chat, le mouton et les poissons. L'invention vise donc également une composition alimentaire qui comprend de 99,9 à 0,01 % en poids d'une base alimentaire et de 0,01 à 99,9 % en poids du produit lipidoprotéique suivant l'invention. Le procédé correspondant d'alimentation d'un animal ou de l'homme consiste à donner à manger à l'animal ou à l'homme une composition telle qu'indiquée ci-dessus.

Le produit lipidoprotéique suivant l'invention peut être notamment utilisé d'une manière très avantageuse comme substitut de la poudre de lait écrémé pour l'alimentation animale d'animaux non sevrés, notamment de veaux. L'invention vise alors, dans ce cas, une composition alimentaire pour l'animal non sevré qui comprend de 99,9 % à 88 % en poids d'un aliment dérivé du lait et de 0,1 à 12 % en poids du produit lipidoprotéique suivant l'invention, le procédé correspondant d'alimentation des animaux non sevrés consistant à administrer cette composition alimentaire auxdits animaux.

De préférence, on additionne la composition de 0,1 à 5 % en poids de lysine, de 0,1 à 5 % en poids de méthionine et/ou de 0,1 à 5 % en poids de thréonine pour pallier leur carence.

Les exemples suivants illustrent l'invention.

EXEMPLE 1

Production du produit lipido-protéique et application comme lacto-remplaceur.

Une tonne de farine (variété Thésée) est mélangée avec 1,2 tonnes d'eau chauffée à 50°C. Le pH du milieu est ajusté entre 6,3 et 6,6 avec de la soude. L'enzyme Termamyl 120 L (Novo Nordisk) est ajoutée à la dose de 0,03 % v/p soit 0,3 litre/tonne de matière sèche. Le mélange est énergiquement agité et brassé dans un réacteur de type "pulpeur", la rotation étant fixée à 260 tpm. La température est progressivement augmentée, par injection de vapeur directe, pour atteindre la valeur de 90°C que l'on maintient pendant 60 minutes.

Les mesures de D.E. (équivalent en dextrose) obtenues dans ces conditions se situent autour de 28 à 32 et les mesures de D.X. (équivalent en glucose libre) sont comprises entre 0,8 et 1,3.

Le mélange est ensuite vidangé dans une cuve de saccharification agitée. On ajuste le pH à 5,5 avec de l'acide sulfurique et on règle la température à 55°C. On y verse un mélange de fungamyl 800 L, de dextrozyme (Novo Nordisk) et de Depol 112 (Biocatalyst) dans les proportions en volume de 5/3/2, ce qui représente 0,5 litre de mélange/tonne de matière sèche. Au bout de 30 heures, l'hydrolysat saccharifié est dilué jusqu'à 25 % de matière sèche finale avec de l'eau chauffée à 60°C. L'hydrolysat est décanté sur une décanteuse centrifuge horizontale Guinard (Modèle D1LC20HC). Le débit d'alimentation de la décanteuse est fixé à 400 litres/heure. Le sédiment ou produit intermédiaire lipidoprotéique est suspendu dans deux fois son volume d'eau, puis séparé par décantation.

Cette opération est réalisée deux fois. 200 kg du produit intermédiaire obtenu ci-dessus sont soumis à une protéolyse enzymatique en milieu concentré, sans apport d'eau, en utilisant seulement l'eau constitutive du produit intermédiaire. L'hydrolyse est réalisée dans un réacteur de type pétrin de la marque Guedu. Le produit intermédiaire lipidoprotéique est chauffé à 55°C par injection directe de vapeur et maintenu à cette température par l'intermédiaire d'une double enveloppe. L'enzyme utilisée est l'alcalase 2,4 L (Novo Nordisk). Le pH est ajusté à 8,5 par de la soude concentrée ; 800 ml d'enzyme sont ajoutés. L'hydrolyse est poursuivie pendant 4 heures. on obtient une suspension liquide. La réaction enzymatique est bloquée par passage dans un échangeur à plaques à la température de 90°C. L'hydrolysat obtenu est directement séché sur une tour d'atomisation.

La composition du produit intermédiaire lipidoprotéique comme du produit suivant l'invention est la suivante (exprimée en % de la matière sèche).

M.A.T. (N x 5,7 : 73
Matières grasses : 12,5
Sucres : 3,5
Cendres : 5
Fibres totales : 5

L'aminogramme est le suivant.

| AMINOGRAMME | | | |
|---|---|---|---|
| Acide aminé | g/100 g d'acides aminés | Acide aminé | g/100 g d'acides aminés |
| Acide aspartique | 3,5 | Isoleucine | 3,9 |
| Hydroxyproline | 0 | Leucine | 8,0 |
| Thréonine | 3,4 | Tyrosine | 3,3 |
| Sérine | 5,0 | Phénylalanine | 6,0 |
| Acide glutamique | 32,9 | Acide gamma- | |
| Proline | 11,3 | aminobutyrique | 0 |
| Glycine | 3,0 | Tryptophane | 0,8 |
| Alanine | 3,3 | Ornithine | 0 |
| Valine | 4,9 | Lysine | 1,6 |
| Cystéine | 1,4 | Histidine | 2,2 |
| Méthionine | 1,4 | Arginine | 3,8 |

La solubilité de la matière azotée contenue dans le produit suivant l'invention en fonction du pH est constante, et centrée sur la valeur de 73 %, comme le montre le tableau I.

TABLEAU I

| SOLUBILITE ISA EN FONCTION DU pH du produit lipidoprotéique suivant l'invention | | | | | |
|---|---|---|---|---|---|
| pH | 2 | 4 | 6 | 8 | 10 |
| % ISA | 73 | 72 | 71 | 73,2 | 74 |

Ce produit a fait l'objet d'une étude zootechnique sur 20 veaux afin d'étudier l'influence du remplacement partiel des protéines du lait par celles du blé sur les performances du veau de boucherie entre 50 et 200 kg de poids vif et sur des paramètres de qualité de la viande.

Deux aliments d'allaitement ont été préparés : un aliment-témoin constitué exclusivement de protéines d'origine laitière et un aliment où 22 % de l'apport protéique est constitué par le produit lipidoprotéique suivant l'invention, ce qui représente 7 % de la matière sèche totale de la formulation. On donne au tableau II les compositions respectivement pour le témoin et le produit substitué.

## TABLEAU II

### COMPOSITION DES ALIMENTS D'ALLAITEMENT

### PREPARES PAR MELANGE A SEC (%)

| Ingrédient | Aliment-témoin | Aliment substitué |
|---|---|---|
| Lait écrémé | 21,8 | 1,0 |
| Lactosérum doux | 18,7 | 31,8 |
| Lait réengraissé (a) | 50 | 50 |
| Lactosérum réengraissé (b) | 4,6 | 3,7 |
| Deltavo (c) | 0,67 | 0,67 |
| Amidon de blé cru | 2,00 | 2,00 |
| Produit lipidoprotéique | 0 | 7 |
| DL méthionine | 0,2 | 0,16 |
| L. lysine | 0,22 | 0,66 |
| Thréonine | 0 | 0,10 |
| Carbonate de calcium | 0,48 | 0,57 |
| Phosphate bicalcique | 0 | 0,40 |
| CMV (Roche) (d) | 1,33 | 1,33 |

TABLEAU II (suite)

| Ingrédient | Aliment-témoin | Aliment substitué |
|---|---|---|
| Analyse | | |
| MS | 96,6 | 96,9 |
| MAT (N x 6,25) | 23,3 | 22,1 |
| MG | 20,7 | 21,3 |
| Cendres | 7,5 | 7 |
| Energie brute (Kcal/g) | 4973 | 5035 |
| (a) Contenant 37 % de lipides (32 % de suif et 5 % d'huile de coprah).  (b) Contenant environ 40 % de suif.  (c) (CCPA) Contenant des maltodextrines et des émulsifiants.  (d) (Roche) Contenant des sels minéraux et des vitamines. | | |

Les résultats obtenus sont résumés aux tableaux III et IV. L'indice de consommation est la quantité en kg d'aliment ingérée pour obtenir un gain de poids de 1 kg. L'hématocrite est un indice d'anémie de l'animal qui est d'autant moins anémié que l'indice est élevé.

TABLEAU III - RESULTATS D'EXPERIMENTATION
(Lot-témoin)

| Période (en jours) | 1 J | 15 J | 29 J | 43 J | 57 J | 71 J | 85 J | 99 J | 113 J | 127 J |
|---|---|---|---|---|---|---|---|---|---|---|
| Poids | 49,200 ±5,090 | 54,600 ±4,950 | 64,500 ±4,060 | 82,900 ±4,950 | 98,300 ±4,500 | 116,600 ±5,040 | 134,000 ±6,430 | 153,000 ±6,240 | 172,300 ±7,540 | 190,300 ±9,570 |
| Consommation | | 6,920 ±0,000 | 10,530 ±0,000 | 21,390 ±1,160 | 24,210 ±0,600 | 28,610 ±0,250 | 32,220 ±1,030 | 35,410 ±0,660 | 36,770 ±2,540 | 38,490 ±1,850 |
| Gain de poids | | 5,400 ±1,350 | 9,900 ±1,290 | 18,400 ±2,720 | 15,400 ±1,650 | 18,300 ±1,700 | 17,800 ±3,490 | 18,600 ±2,550 | 19,300 ±2,110 | 18,00 ±2,980 |
| Indice de consommation | | 1,36 ±0,34 | 1,08 ±0,15 | 1,18 ±0,14 | 1,59 ±0,18 | 1,58 ±0,15 | 1,88 ±0,37 | 1,93 ±0,23 | 1,92 ±0,14 | 2,20 ±0,42 |
| Hématocrite | 34,0 ±6,3 | 34,2 ±7,6 | 30,7 ±5,5 | 24,2 ±5,4 | 20,2 ±4,2 | 21,9 ±2,6 | 22,6 ±1,8 | 22,1 ±2,3 | 20,7 ±2,4 | 18,9 ±1,1 |

## TABLEAU IV - RESULTATS D'EXPERIMENTATION
### (Suivant l'invention)

| Période (en jours) | 1 J | 15 J | 29 J | 43 J | 57 J | 71 J | 85 J | 99 J | 113 J | 127 J |
|---|---|---|---|---|---|---|---|---|---|---|
| Poids | 49,600 ±4,430 | 54,700 ±5,330 | 64,400 ±4,060 | 81,600 ±4,530 | 96,900 ±4,120 | 114,100 ±6,450 | 131,900 ±8,970 | 149,300 ±14,330 | 166,000 ±19,720 | 183,800 ±21,260 |
| Consommation | | 6,890 ±0,110 | 10,300 ±0,430 | 21,000 ±1,170 | 23,730 ±1,030 | 27,050 ±2,980 | 31,410 ±3,210 | 33,740 ±4,610 | 34,550 ±6,510 | 37,870 ±3,780 |
| Gain de poids | | 5,100 ±2,080 | 9,700 ±1,770 | 17,200 ±2,300 | 15,300 ±2,000 | 17,200 ±4,520 | 17,800 ±3,680 | 17,400 ±6,040 | 16,700 ±6,130 | 17,80 ±2,200 |
| Indice de consommation | | 1,61 ±0,80 | 1,09 ±0,19 | 1,24 ±0,15 | 1,57 ±0,21 | 1,69 ±0,58 | 1,81 ±0,28 | 2,30 ±1,33 | 2,29 ±0,69 | 2,14 ±0,18 |
| Hématocrite | 33,8 ±7,8 | 33,3 ±7,8 | 32,8 ±5,6 | 26,3 ±5,9 | 22,6 ±3,8 | 26,6 ±4,4 | 26,1 ±4,3 | 25,5 ±3,7 | 23,2 ±4,2 | 22,8 ±4,0 |

EP 0 533 512 A1

EXEMPLE 2

FORMULATION DU PRODUIT LIPIDOPROTEIQUE EN TANT QU'INGREDIENT ALIMENTAIRE POUR L'ALIMENTATION HUMAINE

| Préparation d'une génoise : ingrédients. | | |
|---|---|---|
| | Témoin-génoise | Génoise suivant l'invention |
| | 125 g de farine<br>125 g de farine<br>4 oeufs | 125 g de farine<br>125 g de sucre<br>3 oeufs<br>15 g de produit lipidoprotéique<br>100 g d'$H_2O$ |
| MST | 474 | 430 |
| Humidité | 576 | 515<br>(dont 100 g d'$H_2O$) |
| Matières grasses | 123 | 94 |
| Matières protéiques | 123-126 | 110 |
| Sucres/amidon | 225 | 226 |
| % MS | 45,1 | 45,5 |
| % MG | 25,9 | 21,9 |
| % MAT | 26,6 | 25,6 |
| Amidon/sucre | 47,5 | 52,6 |

La substitution du quart des oeufs par 15 g du produit lipidoprotéique dont la composition est équivalente à celle de l'exemple 1 permet d'obtenir des génoises moins friables, donc se prêtant mieux à la découpe que la génoise traditionnelle. Le goût et la texture ne sont pas modifiés significativement.

Préparation d'une bavaroise : **substitution des matières grasses** (chantilly).

| Formule classique (1) | MST | HUM | Protéi- nes | MG | Sucres/ amidon | Kcal |
|---|---|---|---|---|---|---|
| 30g mix "bavaroise" | 27 | 3 | 6 | 3 | 21 | 135 |
| 46g $H_2O$ | | 46 | | | | |
| 150g Chantilly | 31 | 119 | 6 | 23 | 2 | 239 |
| 30g sucre | 28 | 2 | | | 28 | 112 |
| Total | 86 | 170 | 12 | 26 | 51 | 486 |
| Formule allégée (2) | | | | | | |
| 30g mix "bavaroise" | 27 | 3 | 6 | 3 | 21 | 135 |
| 155g $H_2O$ | | 155 | | | | |
| 26g sucre | 24,7 | 2,3 | | | 24,7 | 98,8 |
| 14g produit lipidoprotéique | 13,3 | 0,7 | 9,7 | 1,3 | | 50,5 |
| 10g malto-dextrine | 9,5 | 0,5 | | | 9,5 | 4,5 |
| 10g lait écrémé | 9,5 | 0,5 | 3,2 | 0,5 | 6,3 | 42,5 |
| 0,7g xanthane | 0,7 | | | | | |
| Total | 84,7 | 162 | 18,9 | 4,8 | 61,5 | 331,3 |

(1)  33,6 % MST finale
565 Kcal/100 g MST

(2)  34,3 % MST finale
392 Kcal/100 g MST.

**Revendications**

1.  Produit lipidoprotéique comprenant, sur la matière sèche, de 70 à 75 % en poids de matières azotées totales, de 10 à 15 % en poids de lipides, de 4 à 7 % en poids de fibres, de 2 à 5 % en poids de sucres et de 3 à 5 % en poids de cendres, ayant une teneur en glutamine, exprimée en acide glutamique, représentant de 30 à 35 du poids de tous les acides aminés, et ayant une solubilité ISA d'au moins 60 % et d'au plus 95 % et qui est constante, quel que soit le pH.

2.  Procédé de préparation d'un produit lipidoprotéique, caractérisé en ce qu'il consiste à mettre un intermédiaire lipidoprotéique ayant une teneur en glutamine, exprimée en acide glutamique représentant de 30 à 35 % du poids de tous les acides aminés, et répondant à l'analyse suivante : de 70 à 75 % en poids de matières azotées totales, de 8 à 15 % en poids de lipides, de 3 à 7 % en poids de fibres, de 2 à 5 % en poids de sucres et de 3 à 7 % en poids de cendres, en contact avec une protéase.

3. Procédé suivant la revendication 2, caractérisé en ce que l'intermédiaire lipidoprotéique est obtenu en mélangeant de 0,8 à 10 parties en poids d'eau à 8 parties en poids de farine, jusqu'à obtention d'un pâton, en ajoutant au pâton une $\alpha$-amylase en une quantité de 300 à 500 g par tonne de farine, tout en portant le pâton additionné de l'$\alpha$-amylase à une température d'au moins 60°C et d'au plus 110°C pendant au moins 30 minutes, pour obtenir une pâte, en diluant la pâte par 0,3 à 1,5 parties en poids d'eau pour 1 partie en poids de pâte, pour obtenir une suspension et en séparant, par une opération de séparation en fonction de la densité, les constituants de la suspension en un jus sucré léger et en l'intermédiaire lipidoprotéique cherché.

4. Procédé suivant la revendication 3, caractérisé en ce qu'il consiste à mettre la pâte en contact avec une glucoamylase en une quantité de 50 à 300 grammes par tonne de farine.

5. Procédé suivant la revendication 4, caractérisé en ce qu'il consiste à mettre la pâte en contact avec une pentosanase en une quantité de 10 à 200 grammes par tonne de farine.

6. Procédé suivant l'une des revendications 2 à 5, caractérisé en ce qu'il consiste à mettre l'intermédiaire lipidoprotéique en contact avec 2 à 40 grammes, par kilogramme de matière azotée totale de l'intermédiaire lipidoprotéique, de protéase.

7. Procédé suivant l'une des revendications 2 à 6, caractérisé en ce que la protéase est la pepsine, l'alcalase, la neutrase, la trypsine, la chymotrypsine ou la protéase acide.

8. L'utilisation du produit lipidoprotéique suivant la revendication 1 comme aliment pour l'animal ou comme additif protéinique en alimentation humaine.

9. L'utilisation du produit lipidoprotéique suivant la revendication 1 comme substitut de la poudre de lait écrémé pour l'alimentation des animaux non sevrés, notamment des veaux.

10. Composition alimentaire pour l'animal non sevré, notamment pour les veaux, qui comprend de 99,9 % à 88 % en poids d'un aliment dérivé du lait, caractérisée en ce qu'elle comprend de 0,1 à 12 % en poids du produit lipidoprotéique suivant la revendication 1 et, de préférence, de 0,1 à 5 % en poids de lysine, de 0,1 à 5 % en poids de méthionine et/ou de 0,1 à 5 % en poids de thréonine.

**Office européen des brevets**

## RAPPORT DE RECHERCHE EUROPEENNE

Numero de la demande

EP 92 40 2215

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | CA-A-1 146 800 (J. LABATT LTD) <br> * revendications * | 1-3,8 | A23J3/18 <br> A23L1/105 <br> A23J1/12 |
| A | GB-A-1 442 149 (NISSIN SHOKUHIN KAISHA LTD) <br> * revendications * <br> * exemple 1 * | 1-3 | |
| A | GB-A-2 066 043 (THE BOOTS COMPANY LTD) <br> * exemples 1-3 * | 8-10 | |
| A | DATABASE WPIL <br> Section Ch, Week 8537, 1985 <br> Derwent Publications Ltd., London, GB; <br> Class D13, AN 85-227643 <br> & JP-A-60 149 351 (NISHIN FLOUR MILL KK) 6 Août 1985 <br> * abrégé * | 1-3 | |
| A | EP-A-0 407 981 (BRISTOL-MYERS SQUIBB CO.) <br> * revendications * | 1-3 | |

**DOMAINES TECHNIQUES RECHERCHES (Int. Cl.5)**

A23J
A23L

Le présent rapport a été établi pour toutes les revendications

| Lieu de la recherche | Date d'achèvement de la recherche | Examinateur |
|---|---|---|
| LA HAYE | 24 NOVEMBRE 1992 | VUILLAMY V.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)